# EUROPÄISCHE PATENTSCHRIFT

(11) **EP 3 217 201 B1**
(45) Veröffentlichungstag und Bekanntmachung des Hinweises auf die Patenterteilung: **14.11.2018**
(21) Anmeldenummer: 17158694.4
(22) Anmeldetag: 01.03.2017
(51) Int. Cl.: G02B 7/02, G02B 7/10, G02B 23/00, G02B 27/00, F41G 1/38

(54) **UMKEHRSYSTEM FÜR EIN ZIELFERNROHR**
REVERSING SYSTEM FOR A TELESCOPIC SIGHT
SYSTÈME INVERSEUR POUR UNE LUNETTE DE VISÉE

(30) Priorität: 02.03.2016 AT 501662016
(43) Veröffentlichungstag der Anmeldung: 13.09.2017
(73) Patentinhaber: Swarovski-Optik KG., 6067 Absam (AT)
(72) Erfinder: NAGILLER, Rudolf, 6114 Kolsass (AT); ÖTTL, Peter, 6068 Mils (AT)
(74) Vertreter: Burger, Hannes

(56) Entgegenhaltungen:
- DE-U1- 29 802 977
- US-A- 4 172 634
- US-A1- 2009 141 346

## Beschreibung

Die Erfindung betrifft ein Umkehrsystem für ein Zielfernrohr, wobei das Umkehrsystem zumindest zwei in zumindest einem Rohr des Umkehrsystems parallel zu einer optischen Achse des Umkehrsystems und relativ zueinander verschiebbar gelagerte Linsen aufweist, wobei durch ein Verschieben der zumindest zwei verschiebbar gelagerten Linsen ein Abbildungsmaßstab, mit dem ein in einer ersten Bildebene des Umkehrsystems entworfenes Bild in eine zweite Bildebene des Umkehrsystems abgebildet wird, veränderbar ist, wobei die zumindest zwei verschiebbaren Linsen in allen Positionen zwischen der ersten und der zweiten Bildebene angeordnet sind.

Darüber hinaus betrifft die Erfindung ein Zielfernrohr mit einem Objektiv und einem Okular und einem zwischen dem Objektiv und dem Okular angeordneten Mittelrohr, wobei in dem Mittelrohr ein Umkehrsystem angeordnet ist, wobei die erste Bildebene des Umkehrsystems dem Objektiv und die zweite Bildebene des Umkehrsystems dem Okular zugewandt ist, wobei ein von dem Objektiv in der ersten Bildebene entworfenes Zwischenbild von dem Umkehrsystem aufgerichtet in die zweite Bildebene abgebildet ist.

Unter Abbildungsmaßstab wird in dem vorliegenden Zusammenhang das Verhältnis der Größe eines Bildes eines Gegenstandes in der zweiten Bildebene des Umkehrsystems dividiert durch die Größe des Bildes des Gegenstandes in der ersten Bildebene des Umkehrsystems verstanden.

Einführend sei festgestellt, dass in diesem Dokument unter dem Begriff Linsen sowohl Einzellinsen als auch aus mehreren Einzellinsen zusammengesetzte Linsen (zusammengekittete Linsen) verstanden werden. Derartige zusammengesetzte Linsen können beispielsweise durch Verkleben bzw. Verkitten zweier oder mehrerer Einzellinsen miteinander hergestellt sein.

Ein Umkehrsystem und ein Zielfernrohr der eingangs genannten Art sind aus der EP 1 746 451 B1 bekannt geworden. Bei dem bekannten Umkehrsystem wird die Vergrößerung des Umkehrsystems, d.h. der Abbildungsmaßstab, mit dem ein in der ersten Bildebene des Umkehrsystems entworfenes Bild in die zweite Bildebene abgebildet wird, durch Verschieben der Linsen verändert. Durch Erhöhung des Verschiebeweges der Linsen ließe sich der Zoombereich des bekannten Umkehrsystems erhöhen (d.h. das Verhältnis vom betragsmäßig maximalem Abbildungsmaßstab zum betragsmäßig minimalem Abbildungsmaßstab). Die Erhöhung des Verschiebeweges geht jedoch mit einer Verlängerung des Umkehrsystems und somit des Rohres des Umkehrsystems einher.

Aufgrund dieser baulichen Änderung kann es bei der Realisierung eines Umkehrsystems mit einem großen Zoom- und einem großen Verschiebebereich der Linsen, insbesondere bei den höheren Vergrößerungs-Stellungen, zu einer Vergrößerung des freiliegenden Teiles der Innenseite des Rohres des Umkehrsystems kommen, an welchen störende Reflexionen von in das Umkehrsystem einfallendem Umgebungslicht, das nicht parallel zur optischen Achse verläuft, auftreten. Besonders störend wirken sich die Reflexionen aus, wenn sich die verschiebbaren Linsen des Umkehrsystems in einer Position befinden, welche der größten Vergrößerung des Umkehrsystems entspricht.

Das Dokument DE 29802977 U1 mit dem Titel "Pankratisches System" beschreibt ein System zur Veränderung der Vergrößerung bzw. des Zooms in einem Fernrohr bzw. Zielfernrohr. Die darin beschriebene Erfindung stellt sich die Aufgabe, ein solches System zu schaffen, bei welchem die Reflexe durch streifenden Lichteinfall stark reduziert sind. Dazu ist vorgesehen, dass zur Führung der Linse zwischen dieser und dem Führungsrohr zwei Führungsstege angebracht sind, wobei die Linsen bzw. die Linsenfassungen mit dem Führungsrohr nur mittels dieser Führungsstege miteinander in Kontakt stehen. Zwischen den, in Richtung der Längserstreckung des Fernrohrs ausgerichteten Führungsstegen liegende Bereiche stehen mit der Linsenfassung nicht in Kontakt und sind deren Oberflächen reflexionsarm ausgestaltet.

Es ist daher eine Aufgabe der Erfindung, eine Lösung zu schaffen, welche bei einem großen Änderungsbereich des Abbildungsmaßstabes eines Umkehrsystems eine gute Unterdrückung von störenden Lichtreflexionen ermöglicht, insbesondere bei höheren Werten der Vergrößerungs-Stellungen.

Diese Aufgabe wird mit einem Umkehrsystem der eingangs genannten Art erfindungsgemäße dadurch gelöst, dass eine der optischen Achse zugewandte Oberfläche der Innenseite des einen Rohres zumindest einen Absorptionsbereich mit Absorptionszonen zur Absorption von einfallendem Licht und mit zwischen einander benachbarten Absorptionszonen liegenden Gleitflächen für Träger, der zumindest zwei verschiebbar gelagerten Linsen, aufweist, wobei eine Flächensumme der Gleitflächen kleiner als eine Flächensumme der Absorptionszonen ist, wobei die zumindest eine Gleitfläche in einem anderen Abstand zur optischen Achse angeordnet ist als die zumindest eine Absorptionszone.

Die Absorptionszone kann durch eine die Absorption erhöhende Beschichtung, beispielsweise einen hochabsorbierenden Lack oder durch Anbringen von absorbierenden Oberflächenstrukturen oder durch spanabtragende Bearbeitung der Oberfläche realisiert werden. Die Gleitfläche hingegen kann beispielsweise durch Glätten der Oberfläche hergestellt werden. Die erfindungsgemäße Lösung ermöglicht eine sehr effiziente Unterdrückung von Reflexionen des Umkehrsystems.

Um bei gleichzeitiger Unterdrückung von Reflexionen auch eine gute Verschiebbarkeit der verschiebbaren Linsen des Umkehrsystems in dem Rohr zu gewährleisten, kann es vorgesehen sein, dass ein Verhältnis der zumindest einen Absorptionszone zur zumindest einen Gleitfläche größer oder gleich 2:1 ist.

Eine besonders effiziente Unterdrückung von Reflexionen lässt sich dadurch erzielen, dass die zumindest eine Absorptionszone einen mehr als 30 µm, insbesondere 40 µm, größeren oder kleineren Abstand von der optischen Achse als die zumindest eine Gleitfläche aufweist.

Eine Weiterbildung der Erfindung, wonach in einem bezüglich der optischen Achse 14 parallelen Längsschnitt der Innenseite 20 des Umkehrsystem-Rohres 12 Gleitflächen 27 und Absorptionszonen 26 abwechselnd aufeinander folgend angeordnet sind, ist insofern von Vorteil als eine solche Ausbildung des Absorptionsbereichs auf in Längsrichtung und schleifend einfallendes Licht besonders effektiv wirkt.

Gemäß einer bevorzugten Variante der Erfindung kann es vorgesehen sein, dass die zumindest eine Absorptionszone zumindest eine schräg oder quer zur optischen Achse verlaufende Rille aufweist, wobei die zumindest eine Rille in die der optischen Achse zugewandte Oberfläche des Rohres durch Abtragen eines eine Wandung des Rohres bildendes Materials gebildet ist, wobei die Gleitflächen aus zumindest einem Steg gebildet ist, der aus nicht abgetragenem Material der Wandung des Rohres gebildet ist.

Eine optimale Verschiebbarkeit der verschiebbaren Linsen entlang des Rohres ohne eine Beeinträchtigung der Reflexionsunterdrückung lässt sich dadurch erzielen, dass der zumindest eine Steg eine Breite aufweist, deren Betrag aus einem der zwischen 0,05 mm und 0,5 mm liegenden Wertebereich stammt.

Gemäß einer vorteilhaften Variante der Erfindung, die sich durch eine weitere Verbesserung der Reflexionsunterdrückung auszeichnet, kann es vorgesehen sein, dass die zumindest eine Rille eine Tiefe aufweist deren Betrag aus einem der zwischen 0,05 mm und 1 mm liegenden Wertebereich stammt.

Darüber hinaus kann die zumindest eine Rille an ihrer breitesten Stelle jeweils eine Breite aufweisen, deren Betrag aus einem zwischen 0,2mm und 0,3 mm liegenden Wertebereich stammt.

Gemäß einer bevorzugten Variante der Erfindung kann es vorgesehen sein, dass die zumindest eine Rille durch eine schraubenförmig bzw. gewindegangartig an der der optischen Achse zugewandten, inneren Oberfläche des Rohres und um die optische Achse umlaufende Vertiefung in einer Wandung des Rohres ausgebildet ist

Vorteilhafterweise weist die zumindest eine schraubenförmig umlaufende Rille eine Steigung auf, deren Betrag aus einem zwischen 0,2 mm und 2 mm liegenden Wertebereich stammt.

Eine besonders gute Unterdrückung von Falschlicht lässt sich dadurch erreichen, dass eine Winkelsymmetrale eines Öffnungswinkels der zumindest einen Rille in Richtung der ersten Bildebene des Umkehrsystems geneigt sind.

Die Unterdrückung störender Reflexionen bei einem streifenden Lichteinfall kann dadurch verbessert werden, dass die zumindest eine Rille eine in Richtung der ersten Bildebene und in den zumindest einen Steg übergehende Vorderflanke und eine schräg zu der Vorderflanke verlaufende Hinterflanke aufweist, wobei die Vorderflanke und die Hinterflanke einen spitzen Winkel miteinander einschließen und die Vorderflanke bzw. eine Tangente an die Vorderflanke einen Winkel mit der optischen Achse einschließt, der einen Betrag aufweist, der aus einem zwischen 20° und 24° liegenden Wertebereich stammt. Als besonders günstig hat es sich hierbei erweisen, wenn ein Übergangsbereich zwischen der Hinterflanke und der Vorderflanke einen Krümmungsradius aufweist, der kleiner als 0,05 mm ist.

Alternativ zur Verwendung einer schraubenförmigen Rille kann es aber auch vorgesehen sein, dass die zumindest eine Absorptionszone mehrere in Richtung der optischen Achse betrachtet hintereinander angeordnete Rillen aufweist, insbesondere als ringförmig um die optische Achse umlaufende und in sich geschlossene Nuten ausgebildete Rillen.

Das Rohr weist bevorzugt eine Länge auf, deren Betrag aus einem Wertebereich stammt, der zwischen 80 mm und 150 mm liegt. Dies ist besonders hinsichtlich der Erzielung eines großen Verstellbereichs, in dem der Abbildungsmaßstab des Umkehrsystems geändert werden kann, von Vorteil.

Um eine Montage des Umkehrsystems in Zielfernrohre mit Mittelrohren herkömmlicher Dicke zu ermöglichen, kann es vorgesehen sein, dass das Rohr, dessen der optischen Achse zugewandte Oberfläche die Rillen aufweist, einen Außendurchmesser aufweist, der kleiner als 35 mm ist.

Bevorzugterweise beträgt in einer Stellung der zumindest zwei beweglichen Linsen, welche einer größten Vergrößerung des Umkehrsystems entspricht, ein Betrag eines Wertes des Abbildungsmaßstabs zwischen erster und zweiter Bildebene des Umkehrsystems, mindestens 7, insbesondere mindestens 8 (im Sinne des absoluten Betrags des Abbildungsmaßstabs, d.h. ohne Berücksichtigung des Vorzeichens der Bildgröße).

Weiters kann es vorgesehen sein, dass in einer Stellung, der zumindest zwei beweglichen Linsen, welche einer kleinsten Vergrößerung des Umkehrsystems entspricht, ein Betrag eines Wertes des Abbildungsmaßstabs, zwischen erster und zweiter Bildebene des Umkehrsystems, mindestens 0,9, insbesondere mindestens 1 beträgt (ebenfalls im Sinne des absoluten Betrags des Abbildungsmaßstabs).

Weiters kann in der Stellung, der zumindest zwei beweglichen Linsen, welche der kleinsten Vergrößerung des Umkehrsystems entspricht, der Betrag des Wertes des Abbildungsmaßstabs, zwischen erster und zweiter Bildebene des Umkehrsystems, maximal 1,2 sein.

Als besonders günstig hinsichtlich der Unterdrückung von Reflexionen an der Innenseite des Rohres hat es sich herausgestellt, dass die zumindest eine Absorptionszone zumindest in einem Bereich angeordnet ist, der sich in einer Stellung der zumindest zwei verschiebbar gelagerten Linsen, welche dem größten Abbildungsmaßstab entspricht, mit dem das in der ersten Bildebene des Umkehrsystems entworfene Bild aufgerichtet und vergrößert in die zweite Bildebene des Umkehrsystems abgebildet ist, aus Richtung der zumindest zwei verschiebbar gelagerten Linsen betrachtet, hinter den zumindest zwei bewegbar gelagerten Linsen befindet.

Um die Verschiebbarkeit der in dem Rohr verschiebbar gelagerten Linsen zu verbessern, kann es vorgesehen sein, dass die der optischen Achse zugewandte Oberfläche der Innenseite des zumindest Rohres zumindest abschnittsweise mit einer reibungsminimierenden Schicht beschichtet ist.

Darüber hinaus kann die der optischen Achse zugewandte Oberfläche der Innenseite des zumindest Rohres geglättet sein, insbesondere durch Polieren, Honen, Schleifen oder mittels eines spanabtragenden Verfahrens.

Gemäß einer bevorzugten Ausführungsform der Erfindung ist jeder der Träger der zumindest zwei verschiebbar gelagerten Linsen im Wesentlichen als rohrförmige Hülse ausgeführt, wobei an einer Mantel-Außenfläche jeder der Träger zumindest drei Stege angeordnet sind, durch welche der jeweilige Träger an der der optischen Achse zugewandten Oberfläche der Innenseite des zumindest einen Rohres abgestützt ist. Zudem kann es vorgesehen sein, dass das zumindest eine Rohr, in dem die beiden Träger der Linsen axial verschiebbar gelagert sind, zumindest eine parallel zur optischen Achse verlaufende Längsnut aufweist und in einem um die optische Achse verdrehbar gelagerten Steuerrohr angeordnet ist, wobei das Steuerrohr zumindest zwei geschwungene Steuernuten aufweist und an jedem der Träger zumindest ein sowohl in die Längsnut als auch in eine der zumindest zwei Steuernuten eingreifender Mitnehmerzapfen angeordnet ist, wobei die Mitnehmerzapfen unterschiedlicher Träger in unterschiedliche Steuernuten eingreifen, wobei zumindest ein an der Mantelfläche des Steuerrohres anliegender und die Mantelfläche ringförmig umfassender Verstärkungsring angeordnet ist. Durch Verdrehen des Steuerrohres können die Träger der Linsen in Längsrichtung des Rohres verschoben und so der Abbildungsmaßstab des Umkehrsystems verändert werden. Durch den Verstärkungsring wird die mechanische Stabilität des Steuerrohres und somit des gesamten Umkehrsystems wesentlich erhöht. Die in diesem Absatz beschriebene Ausführungsform der Erfindung kann auch ohne das Vorhandensein der vorstehend beschriebenen Absorptionszonen realisiert werden und den Gegenstand einer eigenen Erfindung bilden, welche die Aufgabe, die mechanische Stabilität eines einschlägigen Umkehrsystems zu erhöhen, durch die Anordnung des Verstärkungsringes, löst.

Zudem können die Lage der ersten Bildebene und die Lage der zweiten Bildebene des Umkehrsystems unabhängig von der aktuellen Position der zumindest zwei verschiebbar gelagerten Linsen in Richtung der optischen Achse betrachtet konstant sein.

Die oben genannte Aufgabe lässt sich auch mit einem Zielfernrohr der eingangs genannten Art erfindungsgemäß dadurch lösen, dass es ein Umkehrsystem nach einem der Ansprüche 1 bis 22 aufweist.

Bevorzugt weist das Objektiv des erfindungsgemäßen Zielfernrohres eine Brennweite auf, deren Betrag aus einem Wertebereich stammt, der zwischen 45 mm und 49 mm liegt.

Das Okular des erfindungsgemäßen Zielfernrohres kann beispielsweise eine Brennweite aufweisen, deren Betrag in einem Wertebereich zwischen 45 mm und 49 mm liegt.

Zudem kann das Zielfernrohr eine Austrittspupille aufweisen, die kleiner als 4 mm, insbesondere kleiner als 3,5 mm ist.

Gemäß einer bevorzugten Variante der Erfindung ist es vorgesehen, dass das Zielfernrohr bei dem kleinsten Abbildungsmaßstab, mit dem ein in der ersten Bildebene des Umkehrsystems entworfenes Zwischenbild in die zweite Bildebene des Umkehrsystems abgebildet wird, eine Gesamtvergrößerung aufweist, deren Betrag aus einem Wertebereich stammt, der zwischen 0,7 und 10 liegt, wobei die Gesamtvergrößerung des Zielfernrohres bei dem größten Abbildungsmaßstab, mit dem ein in der ersten Bildebene des Umkehrsystems entworfenes Zwischenbild in die zweite Bildebene des Umkehrsystems abgebildet wird, einen Betrag aufweist, der aus einem Wertebereich stammt, der zwischen 6 und 80 liegt.

Weiters kann das Mittelrohr des Zielfernrohres einen Außendurchmesser aufweisen, der kleiner oder gleich 35 mm ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht eines erfindungsgemäßen Zielfernrohres;
- Fig. 2: eine Draufsicht auf ein Umkehrsystem des Zielfernrohres aus Fig. 1, teilweise geschnitten dargestellt;
- Fig. 3: einen Längsschnitt durch das Umkehrsystem aus Fig. 2;
- Fig. 4: eine Detailansicht eines Rillen aufweisenden Abschnitts des Umkehrsystems aus Fig. 3 mit einer ersten Variante von Rillen;
- Fig. 5: eine Fig. 4 entsprechende Detailansicht mit einer zweiten Variante von Rillen;
- Fig. 6: eine Fig. 4 entsprechende Detailansicht mit einer dritten Variante von Rillen;
- Fig. 7: eine Fig. 4 entsprechende Detailansicht mit einer vierten Variante von Rillen;
- Fig. 8: eine perspektivische Ansicht einer als Träger für eine verschiebbar gelagerte Linse dienenden Hülse des Umkehrsystems aus Fig. 3.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

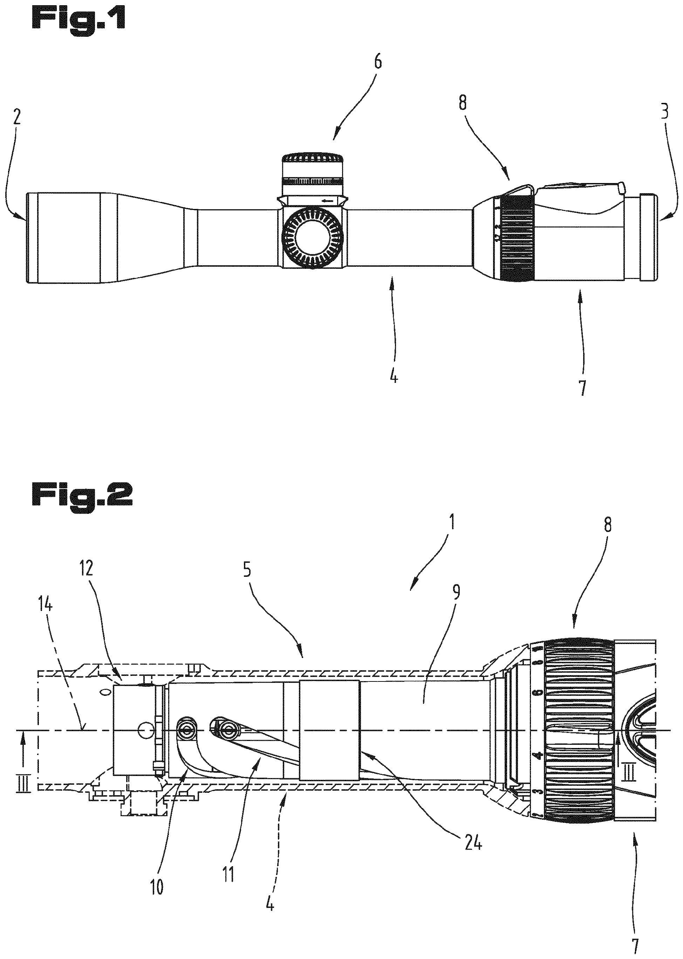

Die Fig. 1 zeigt eine Seitenansicht eines Fernrohrs 1 mit verstellbarer Vergrößerung. Gemäß diesem Ausführungsbeispiel wird das Fernrohr 1 durch ein Zielfernrohr gebildet. Dabei ist neben einem Objektiv 2 und einem Okular 3 in einem Mittelrohr 4 des Fernrohrs 1 ein Linsen umfassendes Umkehrsystem 5 (Fig. 2) angeordnet.

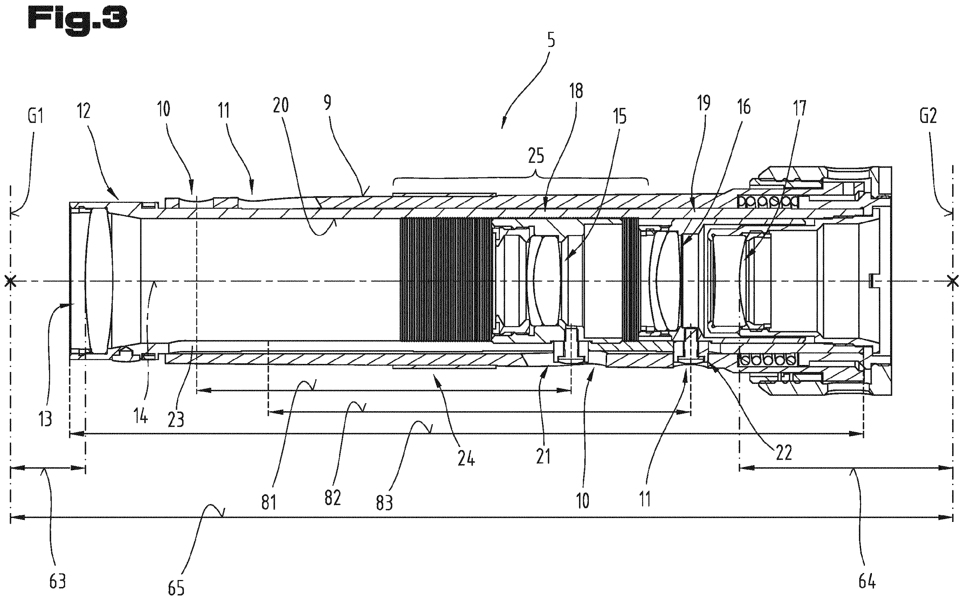

Die Fig. 2 zeigt ein Detail des Zielfernrohrs 1 gemäß Fig. 1 mit geschnitten dargestellten Mittelrohr 4. Das Umkehrsystem 5 ist in an sich bekannter Weise im Inneren des Mittelrohrs 4 schwenkbar angeordnet, wodurch ein Justieren eines Fadenkreuzes beim sogenannten Einschießen gemeinsam mit einer Waffe ermöglicht wird. Dieses Verstellen bzw. Verschwenken des Umkehrsystems 5 in dem Mittelrohr 4 des Fernrohrs 1 erfolgt in ebenfalls bekannter Weise mit Hilfe eines Höhenturms 6 (Fig. 1) und eines Seitenturms. Zur Veränderung bzw. zum Einstellen der Vergrößerung des Fernrohrs 1 weist dieses am okularseitigen Ende vor einem Okulargehäuse 7 einen Stellring 8 für die Zoom-Einstellung auf. Der Stellring 8 ist mit einem Steuerrohr 9 des Umkehrsystems 5 drehgekoppelt. Steuernuten 10, 11 die in dem Steuerrohr 9 ausgebildet sind, ermöglichen bei Verdrehung des Steuerrohrs 9 an einem Umkehrsystem-Rohr 12 eine Verstellung axial verschiebbarer Linsen des Umkehrsystems 5 (Fig. 3).

Die Fig. 3 zeigt einen Längsschnitt des Umkehrsystems 5 gemäß Fig. 2. Die optischen Elemente dieses Umkehrsystems 5 bewirken sowohl eine Umkehrung bzw. Aufrichtung eines in einer objektivseitigen Zwischenbildebene 61 des Zielfernrohrs 1 erzeugten Bildes in eine okularseitige Zwischenbildebene 62 des Zielfernrohrs 1. Zusätzlich erlauben die optischen Elemente des Umkehrsystems 5 aber auch eine Veränderbarkeit des Abbildungsmaßstabes zwischen der ersten objektivseitigen Bildebene 61 und der zweiten okularseitigen Bildebene 62 und damit eine entsprechende bzw. proportionale Veränderung der Gesamtvergrößerung des Fernrohrs 1 zwischen einer minimalen Gesamtvergrößerung und einer maximalen Gesamtvergrößerung. Die optischen Elemente des Umkehrsystems 5 bilden somit gleichzeitig auch ein sogenanntes Zoom-System.

Als diese optischen Elemente umfasst das optische System des Umkehrsystems 5 zunächst eine Feldlinse 13, die in einem objektivseitigen Endbereich des Umkehrsystems 5 angeordnet ist. In Richtung auf einen okularseitigen Endbereich hin folgen entlang einer optischen Achse 14 eine erste Zoom-Linse 15, eine zweite Zoom-Linse 16 und eine Zerstreuungslinse 17. Die beiden Zoom-Linsen 15, 16 sind jeweils in einem Träger 18, 19 gefasst und gemeinsam entlang der optischen Achse 14 verschiebbar. Dazu sind die beiden Träger 18, 19 an einer Innenseite 20 des Umkehrsystem-Rohrs 12 anliegend und in Richtung der optischen Achse 14 verschiebbar gelagert.

Die Träger 18, 19 weisen jeweils einen in axialer Richtung (bezüglich der optischen Achse 14) vorstehenden Mitnehmerzapfen 21, 22 auf. Diese Mitnehmerzapfen 21, 22 reichen durch eine in dem Umkehrsystem-Rohr 12 ausgebildete Längsnut 23 hindurch und in eine der beiden Steuernuten 10, 11 des Steuerrohrs 9 hinein. Auf diese Weise ist zwischen dem Umkehrsystem-Rohr 12, dem Steuerrohr 9 und den beiden Trägern 18, 19 mit den Zoom-Linsen 15, 16 ein Kurvengetriebe gebildet, durch das die Zoom-Linsen 15, 16 in axialer Richtung verschoben werden können. Dazu sind die Kurvenformen der Steuernuten 10, 11 in dem Steuerrohr 9 derart ausgebildet, dass bei einer Verschiebung der Zoom-Linsen 15, 16 sich die Lage der beiden Zwischenbildebenen 61, 62 nicht verändert (zumindest für den Grenzfall einer Abbildung eines im unendlichen befindlichen Gegenstandes).

Bei dem dargestellten Ausführungsbeispiel ist durch die Steuernut 10 für den Träger 18 bzw. Zoomlinse 15 ein Verstellbereich in axialer Richtung mit einer Länge 81 von ca. 55 mm bestimmt. Die Steuernut 11 ermöglicht für die Zoomlinse 16 bzw. den zweiten Träger 19 einen Bewegungsbereich mit einer Länge 82 von ca. 61 mm, wobei eine Länge 83 des Umkehrsystem-Rohrs 12 einen von 115,2 mm hat. In abgewandelten Ausführungsformen des Umkehrsystems 5 kann die Länge 83 des Umkehrsystem-Rohrs 12 Werte aus einem Bereich von 80 mm bis 150 mm annehmen.

Die Linsen des Umkehrsystems 5 haben die folgenden Brennweiten, jeweils bezogen auf eine Wellenlänge des Lichts von 546 nm. Die Feldlinse 13 hat eine Brennweite von +54,1 mm; die erste Zoom-Linse 15 eine Brennweite von +37,8 mm; die zweite Zoom-Linse 16 eine Brennweite von +41,6 mm und die Zerstreuungslinse 17 eine (negative) Brennweite von -29,6 mm. Die Anordnung der Linsen relativ zueinander ist so gewählt, dass ein Abstand 63 zwischen erster Bildebene 61 und der Feldlinse 13 einen Wert von 11,3 mm hat und ein Abstand 64 zwischen Zerstreuungslinse 17 und der zweiten Bildebene 62 einen Wert von 30,8 mm hat, wobei ein Bildebenen-Abstand 65 der zweite Bildebene 62 von der ersten Bildebene 61 einen Wert von 137 mm hat.

In alternativen Ausführungen des Umkehrsystems 5, können die Werte der Brennweiten in folgenden Bereichen liegen. Die Brennweite der Feldlinse 13 zwischen 44,1 mm und 64,1 mm; die Brennweite der ersten Zoom-Linse 15 zwischen 27,8 mm und 47,8 mm; die Brennweite der zweiten Zoom-Linse 16 zwischen 31,6 mm und 51,6 mm und die Brennweite der Zerstreuungslinse 17 zwischen -39,6 mm und -19,6 mm. Dem entsprechend können auch die Werte der vorstehend angegebenen Längen und Abstände um +/- 20 % variiert sein.

Gemäß dem bevorzugten Ausführungsbeispiel der Erfindung kann durch Verstellen der Zoom-Linsen 15, 16 entlang der optischen Achse 14 ein Abbildungsmaßstab in einem Wertebereich von -1,038 (in der kleinsten Gesamtvergrößerung des Fernrohrs 1) bis -8,238 (in der größten Gesamtvergrößerung des Fernrohrs 1) liegen und somit ein Zoom-Faktor einen Wert von 8 erreichen.

Derart hohe Werte des Zoom-Faktors (gegenüber den bisher üblichen Werten von bis 4 oder bis 6) machen eine hohe Passgenauigkeit der Führung der Träger 18, 19 in dem Umkehrsystem-Rohr 12, als auch eine hohe Präzision bei der Verschiebung der Träger 18, 19 in axialer Richtung durch die Wechselwirkung der Mitnehmerzapfen 21, 22 mit den Steuernuten 10, 11 bzw. der Längsnut 23 erforderlich. Bei dem Umkehrsystem 5 ist daher zusätzlich ein Verstärkungsring 24 vorgesehen, der am Umfang des Steuerrohrs 9 anliegend angeordnet bzw. befestigt ist.

Gemäß der Darstellung in Fig. 3 ist in einem Bereich 25 bzw. in einem Längsbereich der Oberfläche der Innenseite 20 des Umkehrsystemrohrs 12 eine Riffelung der Oberfläche vorgesehen.

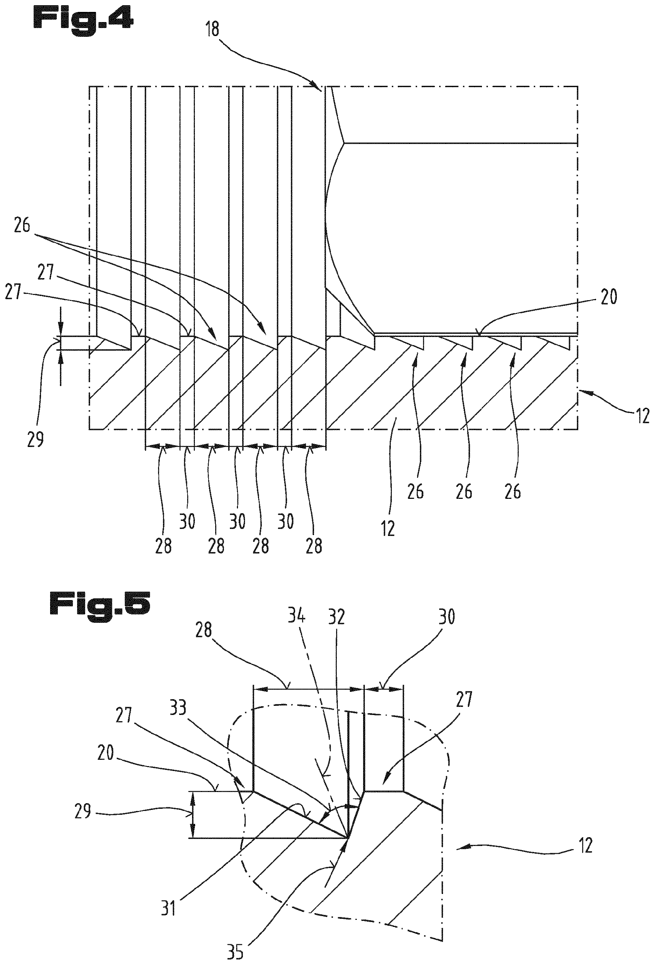

Die Fig. 4 zeigt ein Detail aus dem Bereich 25 des Umkehrsystem-Rohrs 12 mit dem Träger 18 gemäß Fig. 3 stark vergrößert dargestellt. Der Träger 18 liegt an der Innenseite 20 des Umkehrsystem-Rohrs 12 an und kann solcher Art an der Innenseite 20 gleitend, in Längsrichtung des Umkehrsystem 5 verschoben werden. Gemäß der Darstellung in Fig. 4 befindet sich der Träger 18 in dem mit einer Riffelung versehenen Bereich 25 der Innenseite 20 des Umkehrsystem-Rohrs 12 (Fig. 3). Demnach sind in die Innenseite 20 des Umkehrsystem-Rohrs 12 Nuten 26 eingeformt. Diese Rillen bzw. Nuten 26 tragen dazu bei, dass auf die Innenseite 20 des Umkehrsystem-Rohr 12 treffendes Licht nicht zu das zu betrachtende Bild störendem Streulicht führt.

Zur Vermeidung von Streulicht ist im Allgemeinen vorgesehen, die Innenwände von Linsenfassungen und Optikgehäusen zu schwärzen (z.B. schwarz zu eloxieren). Es zeigt sich jedoch, dass besonders bei sehr glatten Oberflächen und sehr flachen bzw. schleifenden Einfallswinkeln der Lichtstrahlen eine Schwärzung der Oberfläche alleine nicht ausreichend ist. Im Übrigen wird, wenn in dieser Beschreibung von "Streulicht" die Rede ist, auf die normgerechte Messung gemäß der DIN ISO 14490-6 (Optik und Photonik, Prüfverfahren für Fernrohre, Teil 6: Bestimmung des Falschlichtanteils) Bezug genommen.

Um Streulicht zu unterdrücken, kann es vorgesehen sein, den Bereich 25 der Innenseite 20 des Umkehrsystem-Rohrs 12 mit einer dicht aufeinander folgenden Abfolge von Rillen bzw. Nuten 26 auszubilden. Gemäß der Darstellung in Fig. 4 sind die Nuten 26 durch kreisringförmige bzw. torusförmige Vertiefungen in der Innenseite 20 des Umkehrsystem-Rohrs 12 ausgebildet. Der Querschnitt der Nut 26 ist in diesem Fall dreieckig.

Gemäß einer alternativen Ausbildungsform werden die Nuten 26 durch eine schraubenartig bzw. gewindegangartig verlaufende Vertiefung ausgebildet. Die Rillen bzw. Nuten 26 in dem Bereich 25 der Innenseite 20 können also auch quer oder schräg bezüglich der optischen Achse 14 des Umkehrsystems 5 verlaufen.

Jede der Nuten 26 bildet für darauf fallende Lichtstrahlen eine Absorptionszone. Die Herstellung dieser Nuten 26 erfolgt vorzugsweise durch Abtragen eines eine Wandung des Umkehrsystem-Rohrs 12 bildenden Materials, beispielsweise durch Fräsen oder Drehen. Dadurch wird eine Abfolge von die Nuten 26 bildenden Vertiefungen bzw. Rillen und zwischen einander benachbarten Nuten 26 liegenden Gleitflächen 27 erzeugt. Gemäß diesem Ausführungsbeispiel sind die Nuten 26 mit einer Breite 28 mit einem Wert von 0,25 mm und einer Tiefe 29 mit einem Wert von 0,1 mm hergestellt. Eine Breite 30 der Gleitflächen 27 zwischen zwei benachbarten Nuten 26 weist einen Wert von 0,1 mm auf. Ein Verhältnis der Breite 28 einer Nut 26 zur Breite 30 einer Gleitfläche 27 ist vorzugsweise größer als 1 : 1. Günstig für die lichtabsorbierende Wirkung ist unter anderem, wenn der Flächenanteil der Nut 26 bzw. der Absorptionszonen entsprechend hoch ist. Eine Wahl der Breite 28 der Nuten 26 und der Breite 30 der Gleitflächen 27 erfolgt günstigerweise so, dass ein Flächeninhalt der Nut 26 zu einem Flächeninhalt der Gleitfläche 27 in einem Verhältnis von gleich oder größer 2 : 1 steht.

Unter Flächeninhalt der Nut 26 bzw. der Absorptionszone soll dabei jeweils der Wert der senkrecht auf die Innenseite 20 des Umkehrsystem-Rohrs 12 projizierten Fläche der Nut 26 verstanden werden. Dem entsprechend sind auch die genannten Verhältnisse zu verstehen und beziehen sich diese auf den Absorptionsbereich bzw. den Bereich 25 der Innenseite 20 des Umkehrsystem-Rohrs 12. Von Vorteil ist, wenn in dem Bereich 25 eine Flächensumme der Gleitflächen 27 kleiner ist als eine Flächensumme der Absorptionszonen 26.

Die Absorptionszonen weisen überwiegend einen um 30 µm größeren Abstand bzw. Radius bezüglich der optischen Achse 14 auf als die Gleitzone 27.

Es erweist sich insbesondere als vorteilhaft, wenn in einem bezüglich der optischen Achse 14 parallelen Längsschnitt der Innenseite 20 des Umkehrsystem-Rohres 12 Gleitflächen 27 und Absorptionszonen 26 abwechselnd aufeinander folgend angeordnet sind. Die Reflexionen unterdrückende Wirkung des Absorptionsbereichs an der Innenseite 20 des Umkehrsystem-Rohrs 12 ist nämlich bei in Längsrichtung und schleifend einfallendem Licht besonders effektiv.

Die Fig. 5 zeigt ein Detail der Innenseite 20 des Umkehrsystem-Rohrs 12 mit einer alternativen Querschnittsform der Nut 26. Die Nut 26 bzw. die Absorptionszone hat eine im Wesentlichen dreieckige Querschnittsform, die durch eine Vorderflanke 31, eine Hinterflanke 32 und die gedachte Verlängerung der Innenseite 20 des Umkehrsystem-Rohrs 12 begrenzt ist. Die Vorderflanke 31 und die Hinterflanke 32 schließen vorzugsweise einen Winkel 33 ein, der einen spitzen Winkel bildet. Andererseits schließt die Vorderflanke 31 mit der optischen Achse 14 (Fig. 3) einen Winkel ein, dessen Wert in einem Bereich zwischen 20° und 24° liegt. Als Vorderflanke 31 wird dabei jene Begrenzungsfläche der Nut 26 bezeichnet, die dem objektivseitigen Ende des Umkehrsystems 5 (Fig. 3) näher liegt, wohingegen als Hinterflanke 32 jene Begrenzung der Nut 26 bezeichnet wird, die dem okularseitigen Endbereich des Umkehrsystems 5 näher liegt. Die Ausbildung der Nut 26 ist darüber hinaus so gestaltet, dass eine Winkelsymmetrale 34 des von der Vorderflanke 31 und der Hinterflanke 32 eingeschlossenen Winkels 33 in Richtung des objektivseitigen Endbereichs bzw. in Richtung der ersten Bildebene 61 des Umkehrsystems 5 geneigt ist. Die Vorderflanke 31 und die Hinterflanke 32 der Absorptionszone bzw. der Nut 26 bilden gewissermaßen eine V-Form, deren Öffnung dem von dem obektivseitigen Endbereich des Umkehrsystems 5 her einfallenden Licht entgegen gerichtet ist. Die Nut 26 ist im Übrigen durch Bearbeitungsverfahren, wie Fräsen oder Drehen, derart gefertigt, dass ein Übergangsbereich zwischen der Vorderflanke 31 und der Hinterflanke 32 einen Krümmungsradius 35 aufweist, der kleiner als 0,05 mm ist.

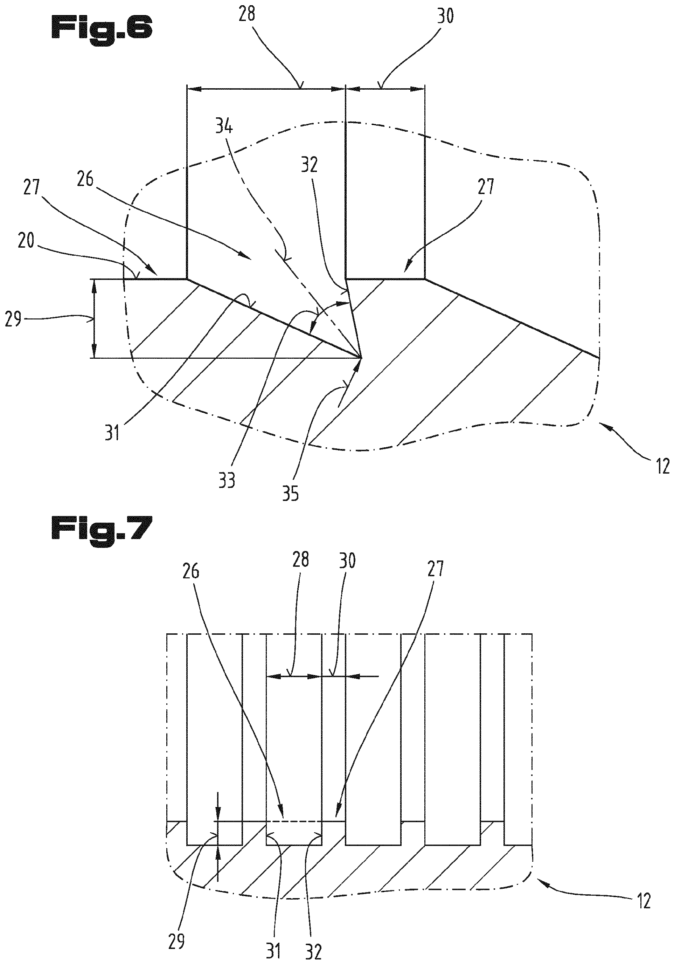

Günstig für die Vermeidung der Streulichtentstehung ist insbesondere, wenn die Hinterflanke 32 mit der optischen Achse 14 (Fig. 3) einen Winkel einschließt, der größer ist als 70°. So ist auch ein Winkel von 90° wie im Ausführungsbeispiel gemäß Fig. 4, es sind aber auch Winkel, die größer als 90° sind, möglich. Bei einem Winkel zwischen der Hinterflanke 32 und der optischen Achse 14 von mehr als 90° liegt schließlich eine Hinterschneidung der Gleitfläche 27 vor, wie dies im Ausführungsbeispiel gemäß Fig. 6 dargestellt ist.

Die Fig. 7 zeigt ein weiteres Ausführungsbeispiel der Riffelung im Bereich 25 der Innenseite 20 des Umkehrsystem-Rohrs 12 gemäß Fig. 3. Die Querschnittsform der Nuten 26 ist in dieser Ausführung rechteckig, das heißt sowohl die Vorderflanke 31 als auch die Hinterflanke 32 schließen mit der optischen Achse 14 einen rechten Winkel ein.

Für die Ausbildung der Riffelung im Bereich 25 der Innenseite 20 des Umkehrsystem-Rohrs 12 haben sich insbesondere die folgenden Abmessungen bzw. Wertebereiche als günstig erwiesen. Die Breite 30 der Gleitflächen 27 bzw. der Stege zwischen einander benachbarten Nuten 26 ist bevorzugt aus einem Wertebereich zwischen 0,05 mm und 0,5 mm gewählt. Die Tiefe 29 der Rillen bzw. Nuten 26 kann Werte aus einem Bereich zwischen 0,05 mm und 1 mm aufweisen. Die Breite 28 der Nuten 26 kann Werte aus einem Bereich zwischen 0,2 mm und 0,3 mm aufweisen. Bei einer Ausführung der Nuten 26 durch eine gewindegangartig bzw. schraubenförmig umlaufende Vertiefung kann der Wert der Steigung bzw. der Wert der Ganghöhe aus einem Bereich zischen 0,2 mm und 2 mm gewählt sein. Bei der Herstellung des Umkehrsystem-Rohrs 12, das heißt insbesondere bei der Fertigung der Innenseite 20 und des mit Rillen versehenen Abschnitts 25 des Umkehrsystem-Rohrs 12 ist vorgesehen, dass in einem abschließenden Behandlungsschritt die Stege bzw. Gleitflächen 27 durch Honen bearbeitet werden, um einen möglichst präzisen Sitz der Träger 18, 19 mit den beiden Zoom-Linsen 15, 16 zu gewährleisten.

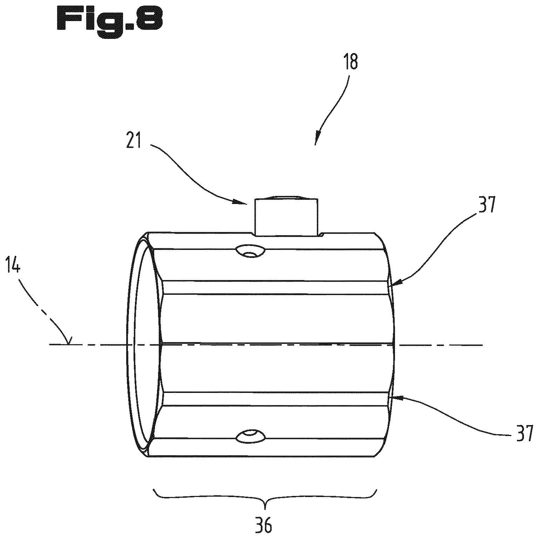

Die Fig. 8 zeigt stellvertretend für die beiden Träger 18, 19 den Träger 18 perspektivisch dargestellt. Dieser hat eine im Wesentlichen zylinderförmige äußere Gestalt und weist an seinem Umfang bzw. an einem Mantel 36 den bezüglich der optischen Achse 14 radial abstehenden Mitnehmerzapfen 21 auf. Der Mantel 36 des Trägers 18 weicht von einem idealen einhüllenden Zylindermantel insofern ab, als parallel bezüglich der optischen Achse 14 verlaufende Gleitstege 37 ausgebildet sind, wobei zwischen zwei Gleitstegen 37 liegende Bereiche des Mantels 36 einen kleineren Radius bezüglich der optischen Achse 14 aufweisen als der Radius der Gleitstege 37 ist. Der Träger 18 weist zumindest drei oder mehr als drei solcher Gleitstege 37 auf, die vorzugsweise äquidistant über den Umfang des Mantels 36 des Träger 18 verteilt angeordnet sind. Beim dargestellten Ausführungsbeispiel weist der Mantel 36 des Trägers 18 sechs Gleitstege 37 auf. Im eingebauten Zustand der Träger 18, 19 in dem Umkehrsystem-Rohr 12 stehen diese somit nur mittels ihrer Gleitstege 37 mit der Innenseite 20 bzw. den Gleitflächen 27 des Umkehrsystem-Rohrs 12 in Kontakt.

Im Übrigen können mit dem erfindungsgemäßen Umkehrsystem 5 Zielfernrohre 1 mit einem subjektiven Sehfeld mit einem Wert größer als 23,0°, vorzugsweise mit einem Wert aus einem Bereich von 23,5° bis 24,5°, hergestellt werden. Dazu ist das Umkehrsystem 5 beispielweise mit einem Okular 3 mit einem Wert der Brennweite von 47,9 mm kombiniert. Ein Wert der Brennweite des Objektivs ist dabei beispielsweise 46,2 mm.

Die Ausführungsbeispiele zeigen mögliche Ausführungsvarianten, wobei an dieser Stelle bemerkt sei, dass auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Zielfernrohr | 31 | Vorderflanke |
| 2 | Objektiv | 32 | Hinterflanke |
| 3 | Okular | 33 | Winkel |
| 4 | Mittelrohr | 34 | Winkelsymmetrale |
| 5 | Umkehrsystem | 35 | Radius |
| 6 | Höhenturm | 36 | Mantel |
| 7 | Okulargehäuse | 37 | Gleitsteg |
| 8 | Stellring | 38 | |
| 9 | Steuerrohr | 39 | |
| 10 | Steuernut | 40 | |
| 11 | Steuernut | 61 | Erste Bildebene |
| 12 | Umkehrsystem-Rohr | 62 | Zweite Bildebene |
| 13 | Feldlinse | 63 | Abstand |
| 14 | optische Achse | 64 | Abstand |
| 15 | Zoom-Linse | 65 | Bildebenen-Abstand |
| 16 | Zoom-Linse | 81 | Länge |
| 17 | Zerstreuungslinse | 82 | Länge |
| 18 | Träger | 83 | Länge |
| 19 | Träger | 84 | |
| 20 | Innenseite | 85 | |
| 21 | Mitnehmerzapfen | | |
| 22 | Mitnehmerzapfen | | |
| 23 | Längsnut | | |
| 24 | Verstärkungsring | | |
| 25 | Bereich | | |
| 26 | Nut | | |
| 27 | Gleitfläche | | |
| 28 | Breite | | |
| 29 | Tiefe | | |
| 30 | Breite | | |

## Patentansprüche

1. Umkehrsystem (5) für ein Zielfernrohr (1), wobei das Umkehrsystem (5) zumindest zwei in einem Rohr (12) des Umkehrsystems (5) parallel zu einer optischen Achse (14) des Umkehrsystems (5) und relativ zueinander verschiebbar gelagerte Linsen (15, 16) aufweist, wobei durch ein Verschieben der zumindest zwei verschiebbar gelagerten Linsen (15, 16) ein Abbildungsmaßstab, mit dem ein in einer ersten Bildebene (61) des Umkehrsystems (5) entworfenes Bild in eine zweite Bildebene (62) des Umkehrsystems (5) abgebildet wird, veränderbar ist, wobei die zumindest zwei verschiebbaren Linsen (15, 16) in allen Positionen zwischen der ersten und der zweiten Bildebene (62) angeordnet sind, wobei eine der optischen Achse (14) zugewandte Oberfläche der Innenseite (20) des einen Rohres (12) zumindest einen Absorptionsbereich (25) mit Absorptionszonen (26) zur Absorption von einfallendem Licht und mit zwischen einander benachbarten Absorptionszonen (26) liegenden Gleitflächen (27) für Träger (18, 19) der zumindest zwei verschiebbar gelagerten Linsen (15, 16) aufweist, wobei eine Flächensumme der Gleitflächen (27) kleiner als eine Flächensumme der Absorptionszonen (26) ist, wobei die Gleitflächen (27) in einem anderen Abstand zur optischen Achse (14) angeordnet sind als die Absorptionszonen (26), **dadurch gekennzeichnet, dass** die zumindest eine Absorptionszone (26) zumindest eine schräg oder quer zur optischen Achse (14) verlaufende Rille (26) aufweist, wobei die zumindest eine Rille (26) in der der optischen Achse (14) zugewandten Oberfläche (20) des Rohres (12) durch Abtragen eines eine Wandung des Rohres (12) bildenden Materials gebildet ist, wobei die Gleitflächen (27) aus zumindest einem Steg gebildet ist, der aus nicht abgetragenem Material der Wandung des Rohres (12) gebildet ist.

2. Umkehrsystem nach Anspruch 1, **dadurch gekennzeichnet, dass** ein Verhältnis aus einem Flächeninhalt der zumindest einen Absorptionszone (26) und einem Flächeninhalt der zumindest einen Gleitfläche (27) größer oder gleich 2:1 ist.

3. Umkehrsystem, nach Anspruch 1 oder 2, **dadurch gekennzeichnet, dass** die zumindest eine Absorptionszone (26) einen mehr als 30 um, insbesondere 40 µm, größeren oder kleineren Abstand von der optischen Achse (14) als die zumindest eine Gleitfläche (27) aufweist.

4. Umkehrsystem nach einem der Ansprüche 1 bis 3, **dadurch gekennzeichnet, dass** in einem bezüglich der optischen Achse (14) parallelen Längsschnitt der Innenseite (20) des einen Rohres (12) Gleitflächen (27) und Absorptionszonen (26) abwechselnd aufeinander folgend angeordnet sind.

5. Umkehrsystem nach einem der Ansprüche 1 bis 4, **dadurch gekennzeichnet, dass** der zumindest eine Steg eine Breite (30) aufweist, deren Betrag aus einem zwischen 0,05 mm und 0,5 mm liegenden Wertebereich stammt.

6. Umkehrsystem nach einem der Ansprüche 1 bis 5, **dadurch gekennzeichnet, dass** die zumindest eine Rille (26) eine Tiefe (29) aufweist deren Betrag aus einem zwischen 0,05 mm und 1 mm liegenden Wertebereich stammt.

7. Umkehrsystem nach einem der Ansprüche 1 bis 6, **dadurch gekennzeichnet, dass** die zumindest eine Rille (26) an ihrer breitesten Stelle eine Breite (28) aufweist, deren Betrag aus einem zwischen 0,2mm und 2 mm liegenden Wertebereich stammt.

8. Umkehrsystem nach einem der Ansprüche 1 bis 7, **dadurch gekennzeichnet, dass** die zumindest eine Rille (26) durch eine schraubenförmig an der der optischen Achse (14) zugewandten, inneren Oberfläche (20) des Rohres (12) und um die optische Achse (14) umlaufende Vertiefung in einer Wandung des Rohres (12) ausgebildet ist.

9. Umkehrsystem nach Anspruch 8, **dadurch gekennzeichnet, dass** die zumindest eine schraubenförmig umlaufende Rille (26) eine Steigung aufweist deren Betrag aus einem zwischen 0,2 mm und 2 mm liegenden Wertebereich stammt.

10. Umkehrsystem nach einem der Ansprüche 1 bis 9, **dadurch gekennzeichnet, dass** eine Winkelsymmetrale (34) eines Öffnungswinkels (33) der zumindest einen Rille (26) in Richtung der ersten Bildebene (61) des Umkehrsystems geneigt ist.

11. Umkehrsystem nach einem der Ansprüche 1 bis 10, **dadurch gekennzeichnet, dass** die zumindest eine Rille (26) eine in Richtung der ersten Bildebene (61) gerichtete und in den zumindest einen Steg übergehende Vorderflanke (31) und eine schräg zu der Vorderflanke (31) verlaufende Hinterflanke (32) aufweist, wobei die Vorderflanke (31) und die Hinterflanke (32) einen spitzen Winkel (33) miteinander einschließen und die Vorderflanke (31) einen Winkel mit der optischen Achse (14) einschließt, der einen Betrag aufweist, der aus einem zwischen 20° und 24° liegenden Wertebereich stammt.

12. Umkehrsystem nach Anspruch 11, **dadurch gekennzeichnet, dass** ein Übergangsbereich zwischen der Hinterflanke (32) und der Vorderflanke (31) einen Krümmungsradius (35) aufweist, der kleiner als 0,05 mm ist.

13. Umkehrsystem nach einem der Ansprüche 1 bis 12, **dadurch gekennzeichnet, dass** die zumindest eine Absorptionszone (26) mehrere in Richtung der optischen Achse (14) betrachtet hintereinander angeordnete Rillen (26) aufweist, insbesondere als ringförmig um die optische Achse (14) umlaufende und in sich geschlossene Nuten ausgebildete Rillen.

14. Umkehrsystem nach einem der Ansprüche 1 bis 13, **dadurch gekennzeichnet, dass** das Rohr (12) eine Länge aufweist, deren Betrag aus einem Wertebereich stammt der zwischen 80 mm und 150 mm liegt.

15. Umkehrsystem nach einem der Ansprüche 1 bis 14, **dadurch gekennzeichnet, dass** das Rohr (12) einen Außendurchmesser aufweist, der kleiner als 35 mm ist.

16. Umkehrsystem nach einem der Ansprüche 1 bis 15, **dadurch gekennzeichnet, dass** in einer Stellung der zumindest zwei beweglichen Linsen (15, 16), welche einer größten Vergrößerung des Umkehrsystems (5) entspricht, ein Betrag eines Wertes des Abbildungsmaßstabs zwischen erster und zweiter Bildebene (61, 62) des Umkehrsystems, mindestens 7, insbesondere mindestens 8 ist.

17. Umkehrsystem nach einem der Ansprüche 1 bis 16, **dadurch gekennzeichnet, dass** in einer Stellung, der zumindest zwei beweglichen Linsen (15, 16), welche einer kleinsten Vergrößerung des Umkehrsystems (5) entspricht, ein Betrag eines Wertes des Abbildungsmaßstabs, zwischen erster und zweiter Bildebene (61, 62) des Umkehrsystems, mindestens 0,9, insbesondere mindestens 1 ist.

18. Umkehrsystem nach Anspruch 17, **dadurch gekennzeichnet, dass** in der Stellung, der zumindest zwei beweglichen Linsen (15, 16), welche der kleinsten Vergrößerung des Umkehrsystems (5) entspricht, der Betrag des Wertes des Abbildungsmaßstabs, zwischen erster und zweiter Bildebene (61, 62) des Umkehrsystems (5), maximal 1,2 ist.

19. Umkehrsystem nach einem der Ansprüche 1 bis 18, **dadurch gekennzeichnet, dass** sich der zumindest einen Absorptionsbereich (25) in einer Stellung der zumindest zwei verschiebbar gelagerten Linsen (15, 16), welche dem größten Abbildungsmaßstab entspricht, mit dem das in der ersten Bildebene (61) des Umkehrsystems (5) entworfene Bild aufgerichtet und vergrößert in die zweite Bildebene (62) des Umkehrsystems (5) abgebildet ist, aus Richtung der zumindest zwei verschiebbar gelagerten Linsen (15, 16) betrachtet, hinter den zumindest zwei bewegbar gelagerten Linsen (15, 16) befindet.

20. Umkehrsystem nach einem der Ansprüche 1 bis 19, **dadurch gekennzeichnet, dass** jeder der Träger (18, 19) der zumindest zwei verschiebbar gelagerten Linsen (15, 16) als rohrförmige Hülse ausgeführt ist, wobei an einer Außenfläche jedes Trägers (18, 19) zumindest drei Gleitstege (37) angeordnet sind, die den jeweiligen Träger (18, 19) an der der optischen Achse (14) zugewandte Oberfläche der Innenseite (20) des Rohres (12) abstützen.

21. Umkehrsystem nach Anspruch 20, **dadurch gekennzeichnet, dass** das eine Rohr (12), dessen der optischen Achse (14) zugewandte Oberfläche die zumindest eine Absorptionszone (26) aufweist, zumindest eine parallel zur optischen Achse (14) verlaufende Längsnut (23) aufweist und in einem um die optische Achse (14) verdrehbar gelagerten Steuerrohr (9) angeordnet ist, wobei das Steuerrohr (9) zumindest zwei geschwungene Steuernuten (10,11) aufweist und an jedem der Träger (18, 19) zumindest ein sowohl in die Längsnut (23) als auch in eine der zumindest zwei Steuernuten (10,11) eingreifender Mitnehmerzapfen (21, 22) angeordnet ist, wobei die Mitnehmerzapfen (21, 22) unterschiedlicher Träger (18, 19) in unterschiedliche Steuernuten (10,11) eingreifen, wobei zumindest ein an der Mantelfläche des Steuerrohres (9) anliegender und die Mantelfläche ringförmig umfassender Verstärkungsring (24) angeordnet ist.

22. Umkehrsystem nach einem der Ansprüche 1 bis 21, **dadurch gekennzeichnet, dass** die Lage der ersten Bildebene (61) und die Lage der zweiten Bildebene (62) des Umkehrsystems (5) unabhängig von der aktuellen Position der zumindest zwei verschiebbar gelagerten Linsen (15, 16), in Richtung der optischen Achse (14) betrachtet, konstant ist.

23. Zielfernrohr mit einem Objektiv und einem Okular und einem zwischen dem Objektiv (2) und dem Okular (3) angeordneten Mittelrohr (4), wobei in dem Mittelrohr (4) ein Umkehrsystem (5) angeordnet ist, wobei die erste Bildebene (61) des Umkehrsystems (5) dem Objektiv (2) und die zweite Bildebene (62) des Umkehrsystems (5) dem Okular (3) zugewandt ist, wobei ein von dem Objektiv (2) in der ersten Bildebene (61) entworfenes Zwischenbild von dem Umkehrsystem (5) aufgerichtet in die zweite Bildebene (62) abgebildet ist, **dadurch gekennzeichnet, dass** das in dem Mittelrohr (4) angeordnete Umkehrsystem (5) ein Umkehrsystem (5) nach einem der Ansprüche 1 bis 22 ist.

24. Zielfernrohr nach Anspruch 23, **dadurch gekennzeichnet, dass** Objektiv (2) eine Brennweite aufweist, deren Betrag aus einem Wertebereich stammt, der zwischen 45 und 49 mm liegt.

25. Zielfernrohr nach Anspruch 23 oder 24, **dadurch gekennzeichnet, dass** das Okular (3) eine Brennweite aufweist, deren Betrag aus einem Wertebereich stammt, der zwischen 45 mm und 49 mm liegt.

26. Zielfernrohr nach einem der Ansprüche 23 bis 25, **dadurch gekennzeichnet, dass** es eine Austrittspupille aufweist, die kleiner als 4 mm, insbesondere kleiner als 3,5 mm ist.

27. Zielfernrohr nach einem der Ansprüche 23 bis 26, **dadurch gekennzeichnet, dass** es bei dem kleinsten Abbildungsmaßstab, mit dem ein in der ersten Bildebene (61) des Umkehrsystems (5) entworfenes Zwischenbild in die zweite Bildebene (62) des Umkehrsystems (5) abgebildet wird, eine Gesamtvergrößerung aufweist, deren Betrag aus einem Wertebereich stammt, der zwischen 0,7 und 10 liegt, wobei die Gesamtvergrößerung des Zielfernrohres bei dem größten Abbildungsmaßstab, mit dem ein in der ersten Bildebene (61) des Umkehrsystems (5) entworfenes Zwischenbild in die zweite Bildebene (62) des Umkehrsystems (5) abgebildet wird, einen Betrag aufweist, der aus einem Wertebereich stammt, der zwischen 6 und 80 liegt.

28. Zielfernrohr nach einem der Ansprüche 23 bis 27, **dadurch gekennzeichnet, dass** das Mittelrohr (4) einen Außendurchmesser aufweist, der kleiner oder gleich 35 mm ist.

## Claims

1. Image-inverting system (5) for a rifle scope (1), wherein the inverting system (5) has at least two mutually displaceable lenses (15, 16) in a tube (12) of the inverting system (5) parallel to an optical axis (14) of the inverting system (5), wherein displacement of the at least two displaceable lenses (15, 16) modifies the reproduction scale at which an image projected onto a first image plane (61) of the inverting system (5) is shown on a second image plane (62) of the inverting system (5), wherein the at least two displaceable lenses (15, 16) are arranged in any positions between the first and the second image plane (62), wherein a surface of the inside (20) of the one tube (12) facing the optical axis (14) having at least one absorption area (25) with absorption zones (26) for absorbing incident light and with sliding surfaces (27) located between neighbouring absorption zones (26) for bearings (18, 19) of the at least two displaceable lenses (15, 16), wherein the total area of the sliding surfaces (27) is smaller than the total area of the absorption zones (26), wherein the sliding surfaces (27) are arranged at a different distance from the optical axis (14) than the absorption zones (26), **characterized in that** the at least one absorption zone (26) has at least one groove (26) running diagonal or transverse to the optical axis (14), wherein the at least one groove (26) in the surface (20) of the tube (12) facing the optical axis (14) is formed by removing a material forming a wall of the tube (12), wherein the sliding faces (27) are formed from at least one ridge formed from material that is not removed from the wall of the tube (12).

2. Inverting system according to claim 1, **characterised in that** a ratio of an area content of the at least one absorption zone (26) and an area content of the at least one sliding surface (27) is greater than or equal to 2:1.

3. Inverting system according to claim 1 or 2, **characterised in that** the at least one absorption zone (26) has a distance from the optical axis (14) that is more than 30 µm, in particular 40 µm, larger or smaller than that of the at least one sliding surface (27).

4. Inverting system according to any one of claims 1 to 3, **characterised in that** a longitudinal section parallel with respect to the optical axis (14) of the inside (20) of the tube (12) has sliding surfaces (27) and absorption zones (26) placed alternately one after the other.

5. Inverting system according to any one of claims 1 to 4, **characterised in that** the at least one ridge has a width (30) with a value from a range between 0.05 mm and 0.5 mm.

6. Inverting system according to any one of claims 1 to 5, **characterised in that** the at least one groove (26) has a depth (29) with a value from a range between 0.05 mm and 1 mm.

7. Inverting system according to any one of claims 1 to 6, **characterised in that** the at least one groove (26) has a width (28) at its widest point with a value from a range between 0.2 mm and 2 mm.

8. Inverting system according to any one of claims 1 to 7, **characterised in that** the at least one groove (26) is formed by a screw-shaped depression in a wall of the tube (12) on the inner surface (20) of the tube (12) that faces the optical axis (14) and running around the optical axis (14).

9. Inverting system according to claim 8, **characterised in that** the at least one screw-shaped circular groove (26) has a gradient with a value from a range between 0.2 mm and 2 mm.

10. Inverting system according to any one of claims 1 to 9, **characterised in that** an angle bisector (34) of an opening angle (33) of the at least one groove (26) is slanted towards the first image plane (61) of the inverting system.

11. Inverting system according to any one of claims 1 to10, **characterised in that** the at least one groove (26) has a leading edge (31) in the direction of the first image plane (61) and that merges into the least one ridge and a back edge (32) running diagonally to the leading edge (31), wherein the leading edge (31) and the back edge (32) form an acute angle (33) to each other and the leading edge (31) makes an angle with the optical axis (14) with a value taken from a range between 20° and 24°.

12. Inverting system according to claim 11, **characterised in that** a transitional area between the back edge (32) and the leading edge (31) has a radius of curvature (35) smaller than 0.05 mm.

13. Inverting system according to any one of claims 1 to 12, **characterised in that** the at least one absorption zone (26) has multiple grooves (26) placed one after another in the direction of the optical axis (14), in particular self-contained grooves designed to run around the optical axis (14) in ring form.

14. Inverting system according to any one of claims 1 to 13, **characterised in that** the tube (12) has a length whose value comes from a range between 80 mm and 150 mm.

15. Inverting system according to any one of claims 1 to 14, **characterised in that** the tube (12) has an external diameter smaller than 35 mm.

16. Inverting system according to any one of claims 1 to 15, **characterised in that** an amount of a value of the reproduction scale between the first and second image plane (61, 62) of the inverting system is at least 7, in particular at least 8, in the position of the at least two moveable lenses (15, 16) that corresponds to the largest magnification of the inverting system (5).

17. Inverting system according to any one of claims 1 to 16, **characterised in that** an amount of a value of the reproduction scale between the first and second image plane (61, 62) of the inverting system is at least 0.9, in particular at least 1, in the position of the at least two moveable lenses (15, 16) that corresponds to the smallest magnification of the inverting system (5).

18. Inverting system according to claim 17, **characterised in that** the amount of the value of the reproduction scale between the first and second image plane (61, 62) of the inverting system (5) is a maximum of 1.2, in the position of the at least two moveable lenses (15, 16) that corresponds to the smallest magnification of the inverting system (5).

19. Inverting system according to any one of claims 1 to 18, **characterised in that**, in the position of the at least two displaceable lenses (15, 16) that corresponds to the largest reproduction scale at which the image projected on the first image plane (61) of the inverting system (5) is shown upright and magnified on the second image plane (62) of the inverting system (5), the at least one absorption area (25) is located behind the at least two moveable lenses (15, 16) when viewed from the direction of the at least two displaceable lenses (15, 16).

20. Inverting system according to any one of claims 1 to 19, **characterised in that** each of the bearings (18, 19) of the at least two displaceable lenses (15, 16) is configured as a tubular sleeve, wherein at least three glide stops (37) are arranged on the external surface of each bearing (18, 19) to support the particular bearing (18, 19) on the surface of the inside (20) of the tube (12) that faces the optical axis (14).

21. Inverting system according to claim 20, **characterised in that** the tube (12) whose surface facing the optical axis (14) has the at least one absorption zone (26), has at least one longitudinal channel (23) running parallel to the optical axis (14) and placed in a guide rod (9) that can be twisted around the optical axis (14), wherein the guide rod (9) has at least two curved guide channels (10, 11) and each of the bearings (18, 19) has at least one tappet (21, 22) that engages both in the longitudinal channel (23) and in one of the at least two guide channels (10, 11), wherein the tappets (21, 22) of different bearings (18, 19) engage in different guide channels (10, 11), wherein at least one reinforcing ring (24) is placed touching the sheath surface of the guide rod (9) such that it grasps the sheath surface in a ring.

22. Inverting system according to any one of claims 1 to 21, **characterised in that** the position of the first image plane (61) and the position of the second image plane (62) of the inverting system (5) is constant, independently of the current position of the at least two displaceable lenses (15, 16), viewed in the direction of the optical axis (14).

23. Rifle scope with an objective and an ocular and a central tube (4) positioned between the objective (2) and the ocular (3), with a inverting system (5) placed inside the central tube (4), wherein the first image plane (61) of the inverting system (5) faces the objective (2) and the second image plane (62) of the inverting system (5) faces the ocular (3), wherein an intermediate image projected by the objective (2) on the first image plane (61) is reproduced by the inverting system (5) upright on the second image plane (62), **characterised in that** the inverting system (5) placed in the central tube (4) is a inverting system (5) according to any one of claims 1 to 22.

24. Rifle scope according to claim 23, **characterised in that** the objective (2) has a focal length with a value from a range between 45 and 49 mm.

25. Rifle scope according to claim 23 or 24, **characterised in that** the ocular (3) has a focal length with a value from a range between 45 mm and 49 mm.

26. Rifle scope according to any one of claims 23 to 25, **characterised in that** it has an exit pupil smaller than 4 mm, in particular smaller than 3.5 mm.

27. Rifle scope according to any one of claims 23 to 26, **characterised in that**, at the smallest reproduction scale at which an intermediate image projected on the first image plane (61) of the inverting system (5) is shown on the second image plane (62) of the inverting system (5), it has a total magnification with a value from a range between 0.7 and 10, wherein at the largest reproduction scale at which an intermediate image projected on the first image plane (61) of the inverting system (5) is shown on the second image plane (62) of the inverting system (5), the total magnification of the rifle scope has a value from a range between 6 and 80.

28. Rifle scope according to any one of claims 23 to 27, **characterised in that** the central tube (4) has an external diameter of less than or equal to 35 mm.

## Revendications

1. Système d'inversion (5) pour une lunette de visée (1), le système d'inversion (5) comprenant au moins deux lentilles (15, 16) disposées dans un tube (12) du système d'inversion (5) parallèlement à un axe optique (14) du système d'inversion (5) et logées de manière coulissante entre elles, un coulissement des au moins deux lentilles (15, 16) logées de manière coulissante permettant de modifier un grossissement avec lequel une image projetée dans un premier plan d'image (61) du système d'inversion (5) est représentée dans un deuxième plan d'image (62) du système d'inversion (5), les au moins deux lentilles coulissantes (15, 16) étant disposées dans toutes les positions entre le premier et le deuxième plan d'image (62), une surface de l'intérieur (20) d'un tube (12), orientée vers l'axe optique (14), comprend au moins une partie d'absorption (25) avec des zones d'absorption (26) pour l'absorption de la lumière incidente et avec au moins des surfaces de glissement (27) se trouvant entre des zones d'absorption (26) adjacentes entre elles, pour les supports (18, 19) des au moins deux lentilles (15, 16) logées de manière coulissante, une somme des superficies des surfaces lisses (27) étant inférieure à une somme des superficies des zones d'absorption (26), les surfaces de glissement (27) étant disposées, par rapport à l'axe optique (14), à une distance différente des zones d'absorption (26), **caractérisé en ce que** l'au moins une zone d'absorption (26) comprend au moins une rainure (26) s'étendant de manière oblique ou transversale par rapport à l'axe optique (14), l'au moins une rainure (26) étant réalisée dans la surface (20) du tube (12) orientée vers l'axe optique (14) par enlèvement d'un matériau constituant la paroi du tube (12), les surfaces de glissement (27) étant constituées d'au moins une nervure qui est réalisée à partir du matériau de la paroi du tube (12) qui n'a pas été enlevée.

2. Système d'inversion selon la revendication 1, **caractérisé en ce qu'**un rapport entre une superficie de l'au moins une zone d'absorption (26) et une superficie de l'au moins une surface de glissement (27) est supérieur ou égale à 2:1.

3. Système d'inversion selon la revendication 1 ou 2, **caractérisé en ce que** l'au moins une zone d'absorption (26) présente une distance par rapport à l'axe optique (14) supérieure ou inférieure, de plus de 30 µm, plus particulièrement 40 µm, à l'au moins une surface de glissement (27).

4. Système d'inversion selon l'une des revendications 1 à 3, **caractérisé en ce que**, dans une coupe longitudinale, parallèle à l'axe optique (14), de l'intérieur (20) d'un tube (12), les surfaces de glissement (27) et les zones d'absorption (26) sont disposées de manière alternée entre elles.

5. Système d'inversion selon l'une des revendications 1 à 4, **caractérisé en ce que** l'au moins une nervure présente une largeur (30) dont la valeur provient d'une plage de valeurs entre 0,05 mm et 0,5 mm.

6. Système d'inversion selon l'une des revendications 1 à 5, **caractérisé en ce que** l'au moins une rainure (26) présente une profondeur (29) dont la valeur provient d'une plage de valeurs entre 0,05 mm et 1 mm.

7. Système d'inversion selon l'une des revendications 1 à 6, **caractérisé en ce que** l'au moins une rainure (26) présente, à son point le plus large, une largeur (28) dont la valeur provient d'une plage de valeurs entre 0,2 mm et 2 mm.

8. Système d'inversion selon l'une des revendications 1 à 7, **caractérisé en ce que** l'au moins une rainure (26) est réalisée à l'aide d'un renfoncement entourant de manière hélicoïdale une surface interne (20) du tube (12), orientée vers l'axe optique (14) et s'étendant autour de l'axe optique (14) dans une paroi du tube (12).

9. Système d'inversion selon la revendication 8, **caractérisé en ce que** l'au moins une rainure hélicoïdale (26) présente un pas dont la valeur provient d'une plage de valeurs entre 0,2 mm et 2 mm.

10. Système d'inversion selon l'une des revendications 1 à 9, **caractérisé en ce qu'**une bissectrice (34) d'un angle d'ouverture (33) de l'au moins une rainure (26) est inclinée en direction du premier plan d'image (61) du système d'inversion.

11. Système d'inversion selon l'une des revendications 1 à 10, **caractérisé en ce que** l'au moins une rainure (26) présente un flanc avant (31) orienté en direction du premier plan d'image (61) et effectuant une transition vers l'au moins une nervure, et un flanc arrière (32) s'étendant de manière oblique par rapport au flanc avant (31), le flanc avant (31) et le flanc arrière (32) formant entre eux un angle aigu (33) et le flanc avant (31) formant un angle avec l'axe optique (14) qui présente une valeur provenant d'une plage de valeurs entre 20° et 24°.

12. Système d'inversion selon la revendication 11, **caractérisé en ce qu'**une zone de transition entre le flanc arrière (32) et le flanc avant (31) présente un angle de courbure (35) inférieur à 0,05 mm.

13. Système d'inversion selon l'une des revendications 1 à 12, **caractérisé en ce que** l'au moins une zone d'absorption (26) comprend plusieurs rainures (26) disposées les unes derrière les autres, vues dans la direction de l'axe optique (14), plus particulièrement sous la forme de rainures s'étendant de manière annulaire autour de l'axe optique (14) et fermées sur elles-mêmes.

14. Système d'inversion selon l'une des revendications 1 à 13, **caractérisé en ce que** le tube (12) présente une longueur dont la valeur provient d'une plage de valeurs entre 80 mm et 150 mm.

15. Système d'inversion selon l'une des revendications 1 à 14, **caractérisé en ce que** le tube (12) présente un diamètre extérieur qui est inférieur à 35 mm.

16. Système d'inversion selon l'une des revendications 1 à 15, **caractérisé en ce que**, dans une position des au moins deux lentilles mobiles (15, 16), qui correspond au plus fort agrandissement du système d'inversion (5), une valeur du grossissement entre le premier et le deuxième plan d'image (61, 62) du système d'inversion est d'au moins 7, plus particulièrement d'au moins 8.

17. Système d'inversion selon l'une des revendications 1 à 16, **caractérisé en ce que**, dans une position des au moins deux lentilles mobiles (15, 16), qui correspond au plus faible agrandissement du système d'inversion (5), une valeur du grossissement entre le premier et le deuxième plan d'image (61, 62) du système d'inversion est d'au moins 0,9, plus particulièrement d'au moins 1.

18. Système d'inversion selon la revendication 17, **caractérisé en ce que**, dans une position des au moins deux lentilles mobiles (15, 16), qui correspond au plus faible agrandissement du système d'inversion (5), une valeur du grossissement entre le premier et le deuxième plan d'image (61, 62) du système d'inversion (5) est de 1,2 maximum.

19. Système d'inversion selon l'une des revendications 1 à 18, **caractérisé en ce que** l'au moins une zone d'absorption (25), dans une position des au moins deux lentilles mobiles (15, 16), qui correspond au plus fort grossissement du système d'inversion (5), avec lequel l'image projetée dans le premier plan d'image (61) du système d'inversion (5) est redressée et représentée de manière agrandie dans le deuxième plan d'image (62) du système d'inversion (5) se trouve, vue dans la direction des au moins deux lentilles (15, 16) logées de manière coulissante, derrière les au moins deux lentilles (15, 16) logées de manière mobile.

20. Système d'inversion selon l'une des revendications 1 à 19, **caractérisé en ce que** chaque support (18, 19) des au moins deux lentilles (15, 16) logées de manière coulissante est conçu comme un manchon tubulaire, moyennant quoi, sur une surface extérieure de chaque support (18, 19), sont disposées au moins trois nervures de coulissement (37) qui soutiennent le support (18, 19) concerné contre la surface, orientée vers l'axe optique (14), de l'intérieur (20) du tube (12).

21. Système d'inversion selon la revendication 20, **caractérisé en ce que** le tube (12), dont la surface orientée vers l'axe optique (14) comprend l'au moins une surface d'absorption (26), comprend au moins une rainure longitudinale (23) s'étendant parallèlement à l'axe optique (14) et qui est disposées dans un tube de commande (9) logé de manière rotative autour de l'axe optique (14), le tube de commande (9) comprenant au moins deux rainures de commande courbées (10, 11) et, sur chaque des supports (18, 19) est disposé au moins un tenon d'entraînement (21, 22) s'emboîtant aussi bien dans la rainure longitudinale (23) que dans une des au moins deux rainures de commande (10, 11), les tenons d'entraînement (21, 22) emboîtant différents supports (18, 19) dans différentes rainures de commande (10, 11), au moins une bague de renforcement (24) étant prévue, qui s'appuie contre la surface d'enveloppe du tube de commande (9) et qui entoure de manière annulaire la surface d'enveloppe.

22. Système d'inversion selon l'une des revendications 1 à 21, **caractérisé en ce que** la position du premier plan d'image (61) et la position du deuxième plan d'image (62) du système d'inversion (5) sont constantes, indépendamment de la position actuelle des au moins deux lentilles (15, 16) logées de manière coulissante, vues en direction de l'axe optique (14).

23. Lunette de visée avec un objectif et un oculaire et un tube central (4) disposé entre l'objectif (2) et l'oculaire (3), moyennant quoi, dans le tube central (4) est disposé un système d'inversion (5), le premier plan d'image (61) du système d'inversion (5) est orienté vers l'objectif (2) et le deuxième plan d'image (62) du système d'inversion (5) est orienté vers l'oculaire (3), une image intermédiaire projetée par l'objectif (2) vers le premier plan d'image (61) étant redressée par le système d'inversion (5) et représentée sur le deuxième plan d'image (62), **caractérisé en ce que** le système d'inversion (5) disposé dans le tube central (4) est un système d'inversion (5) selon l'une des revendications 1 à 22.

24. Lunette de visée selon la revendication 23, **caractérisée en ce que** l'objectif (2) présente une focale dont la valeur provient d'une plage de valeurs située entre 45 et 49 mm.

25. Lunette de visée selon la revendication 23 ou 24, **caractérisée en ce que** l'oculaire (3) présente une focale dont la valeur provient d'une plage de valeurs située entre 45 et 49 mm.

26. Lunette de visée selon l'une des revendications 23 à 25, **caractérisée en ce qu'**elle comprend une pupille de sortie qui est inférieure à 4 mm, plus particulièrement inférieure à 3,5 mm.

27. Lunette de visée selon l'une des revendications 23 à 26, **caractérisée en ce que**, dans le cas du plus faible grossissement avec lequel une image intermédiaire projetée dans le premier plan d'image (61) du système d'inversion (5) est représentée dans le deuxième plan d'image (62) du système d'inversion (5), elle présente un agrandissement total dont la valeur provient d'une plage de valeur située entre 0,7 et 10, l'agrandissement total de la lunette de visée, dans le cas du grossissement le plus fort avec lequel une image intermédiaire projetée dans le premier plan d'image (61) du système d'inversion (5) est représentée dans le deuxième plan d'image (62) du système d'inversion (5), présente une valeur qui provient d'une plage de valeur située entre 6 et 80.

28. Lunette de visée selon l'une des revendications 23 à 27, **caractérisée en ce que** le tube central (4) présente un diamètre extérieur qui est inférieur ou égal à 35 mm.
